# EUROPEAN PATENT SPECIFICATION

(11) **EP 3 519 742 B1**
(45) Date of publication and mention of the grant of the patent: **30.03.2022**
(21) Application number: 17854282.5
(22) Date of filing: 28.02.2017
(51) Int. Cl.: F24S 10/30, F24S 10/50, F24S 90/00, F24S 80/00, F28D 7/02, F28D 7/08, F28F 9/24, F28F 9/26, F28F 13/08, F28F 13/12

(54) **LIQUID-GAS HEAT EXCHANGER FOR USE IN A HEAT EXCHANGE SYSTEM USING SOLAR ENERGY**
FLÜSSIGKEIT-GAS-WÄRMETAUSCHER ZUR VERWENDUNG IN EINEM WÄRMEAUSTAUSCHSYSTEM UNTER VERWENDUNG VON SONNENENERGIE
ÉCHANGEUR DE CHALEUR LIQUIDE-GAZ DESTINÉ À ÊTRE UTILISÉ DANS UN SYSTÈME D'ÉCHANGE DE CHALEUR UTILISANT L'ÉNERGIE SOLAIRE

(30) Priority: 30.09.2016 US 201615281314
(43) Date of publication of application: 07.08.2019
(73) Proprietor: Savard, Gilles, Montreal, Quebec H1H 0A1 (CA)
(72) Inventor: Savard, Gilles, Montreal, Quebec H1H 0A1 (CA)
(74) Representative: Hege, Frédéric
(86) International application number: PCT/CA2017/000037
(87) International publication number: WO 2018/058233

(56) References cited:
- US-A- 4 011 904
- US-A- 4 137 705
- US-A- 4 159 708
- US-A- 4 524 823
- US-A- 4 738 309
- US-A- 5 452 710
- US-A1- 2015 184 955
- US-B2- 9 151 488

## Description

### FIELD OF THE INVENTION

The present invention relates generally to heat exchange systems but more particularly to a heat exchange system for use in liquid-gas heat exchange using solar energy.

### BACKGROUND OF THE INVENTION

US patent 4,210, 202 discloses rows of heat exchange tubes that are supported by transversely disposed support strips having a plurality of V-shaped members interconnected end to end in a manner so that the strips act as a structural member supporting the weight of the tubes and additional support elements from all rows above a given row. Each leg of each V-shaped member has a generally triangular tab bendable out of the plane of its associated leg. Rows of heat exchange tubes are supported by transversely disposed support strips having a plurality of V-shaped members interconnected end to end in a manner so that said strips act as a structural member supporting the weight of the tubes and additional support elements from all rows above a given row. Each leg of each V-shaped member has a generally triangular tab bendable out of the plane of its associated leg.

US patent 5, 452, 710 describes a self-sufficient apparatus and method for conveying solar heat energy from an attic under a solar energy absorbing roof to a place remote from the attic. A synergetic combination of in-attic air controlling devices such as fans and motorized vents are energized by stored electrical energy generated by a sunlight-to-electrical-energy panel located adjacent the roof. The panel, preferably a photovoltaic array, has a limited size, providing just sufficient electrical energy to operate the electrical elements of the apparatus. It will not impair the heat absorbing capability of the roof and can be located where it is not aesthetically objectionable. In a preferred embodiment a forced-air-to-water heat exchanger provides solar heated domestic hot water. In another embodiment solar heated attic air is drawn into a fan and forced via a duct to another part of the building.

US application 20080185132 discloses a heat exchanger for a gas boiler for producing hot water having a casing extending along a first axis and through which combustion fumes flow. A tube along which water flows, and which is housed inside the casing, and coils about the first axis to form a helix having a succession of turns; and deflecting means for directing the fumes between successive turns of a first helix portion in a first direction and between successive turns of a second helix portion in a second direction opposite to first direction. The tube forming the turns of the first helix portion has a first cross section and the tube forming the turns of the second helix portion has a second cross section different from the first cross section.

Documents US 4159708 A and US 2015/184955 A1 further disclose such heat exchangers.

What the prior art fails to show are systems that purposely create turbulence and efficiently control the directional flow of air so as to ensure that the highest percentage of heat transfer occurs between different fluids, whether gas or liquid.

### SUMMARY OF THE INVENTION

In view of the foregoing disadvantages inherent in the known devices now present in the prior art, the present invention, which will be described subsequently in greater detail, is to provide objects and advantages which are:

To provide for an efficient heat exchange system for use in liquid-gas heat exchange that is more efficient at heat transfer than any other heat transfer, including, but not necessarily solar energy system.

This inventor's objective is to integrate an air-liquid (or gas liquid) heat exchanger inside the operation of a system of solar water heater which is a more efficient technology than all other in this field. Comparative tests were conducted in real situations under scientific supervision, with an industry standard liquid-liquid solar water heater.

It is generally accepted in the scientific community that air cannot be as good a vector of transport and energy transfer for this type of system, much less be better, due to molecular mass and specific heat capacity of air being only a fraction of that of liquid. So no one has seriously taken on the task of developing a more efficient air-liquid heat exchanger.

The results of supervised tests have shown, for the system operating with the air-liquid heat exchanger, a superiority of more than 20% on the system operating with a liquid-liquid heat exchanger which is the industry standard.

The study of the different equipment of the prior art shows that no air-liquid heat exchanger has the general form, the constituent elements, their interactions, their assembly and their shapes and the innovation of a multifunction deflector which produces multiple effects on the air stream.

It is a major advantage of this invention to be easily manufactured in large scale because of easily reproducible components.

It is another advantage of this invention to have structural integrity because the repeating shapes create a stronger overall structure.

In order to do so, the invention works as part of a three part system comprised of three components: a solar air-heat collector, a transfer conduit, and a air-liquid heat exchanger.

The invention is enclosed inside an insulated container adapted to allow for hot air to pass therethrough. A coil member extends through the insulated container and is adapted to allow a heat transfer liquid to pass in through the coil member and then out of the insulated chamber. The spacing between the windings of the coil are predefined and the coil is in a predetermined position inside the insulated chamber, so as to force air to pass between the coil windings and increase the air contact with the coil and provide a large heat exchange. Several baffle members are placed between the coil member and an interior area of the insulated chamber and force air to circulate multiple times through the coil member, thereby allowing for an efficient exchange from the hot air to the heat transfer liquid. The insulated container contains the heat exchanger which is comprised of a plurality of chambers, wherein each of the plurality of chambers has a repeating pattern of shapes wherein each of the plurality of chambers consists of two opposite deflectors, wherein each deflector is a mirror image of its opposite deflector but shifted approximately half a the wall length. Each of the deflectors is defined by a specific sequence of components starting with a rounded wall from which extends a shear barrier and the wall is terminated by a diverter. The diverter, along with the shear barrier, forms a low pressure zone which creates a vortex. A coil for carrying a liquid wherein the coil consists of a long winding pipe forming tube bundles passing through all of the plurality of chambers.

The air heated within a thermal solar collector is pushed by a fan. The warmed up liquid can be stored inside a tank.

To achieve an optimum result of energy transfer, it was necessary to master two factors which control air flow. First achieve great turbulence, second efficiently and accurately steer the air stream travelling through the heat exchanger.

Turbulence is commonly observed in everyday phenomena such as surf, clouds, and smoke. Most flows occurring in nature and in engineering applications are turbulent. However, turbulence has long resisted physical analysis. Richard Feynman has described it as the most important unsolved problem of classical physics. However, creating turbulence is relatively easy to accomplish. What is difficult to attain is a high level of turbulence capable of thoroughly stirring a fluid, be it gas or liquid.

The configuration of the various elements composing the air-liquid heat exchanger and their positioning relative to each other combine to cause large-scale turbulence and repetitively along the path the air travels inside the heat exchanger.

The coil tubing has the primary function of circulating the liquid which absorbs the energy which is transferred by the colliding air molecules. The speed at which the air passes between the pipe winding which forms the coil contributes greatly to cause air turbulence.

The air is forced to cross the winding perpendicularly which reduces and divides the air flow into several small traffic areas. The total of these small surfaces being smaller than the chamber of the heat exchanger, the air is forced to reposition its molecules around obstacles to fit into these smaller spaces. The gap between the windings being smaller than what is required for the air to flow forces the air to increase its velocity.

Following the narrow passage, air once again reaches a larger area, which slows down its velocity and creates additional turbulence.

The first condition is inherent in the operation that the air must collide with the pipe to transfer its energy and therefore necessarily change direction on this occasion. This creates turbulence in the flow.

The second condition is the fact that for each pipe bundle, the positioning of each element is calculated and determined in relation to each other and, as a result, reduces the volume into which air can flow, which forces it to reposition itself in an extremely turbulent movement.

It is therefore the presence and the relational positioning of the winding, which creates turbulence by producing a sequential modification of the space available for the air to circulate.

To give a better perspective, the smallest prototype that was tested consists in a coil with 32 sections of pipe bundle, 128 segments of pipes, and 160 air gaps between these pipe sections and segments. Besides colliding with the coil, the repositioning between the coil windings, the air also collides with the exchanger baffles. In a short path of about six feet in length, the air meets 496 obstacles forcing repositioning.

This efficiency to create repetitively and consistently high turbulence and cause multiple contacts and repeated air with the coil pipe contributes to the higher efficiency of the heat exchanger. No prior art offers such a density of turbulence nor such efficiency.

In this air-liquid heat exchanger, the same air repeatedly crosses several sections of the coil that contains the same water which heats up gradually as the energy contained in the air is transferred at each intersection of the air with the coil. At the end of the run, the air has yielded practically all of its energy, which results in the high efficiency of this invention.

To redirect the air flow to the coil, an original deflector was developed which consists in a rounded, or curved shape which ends with a diverter preceded by a shear barrier in an angle. This configuration helps to uniformly distribute the arrival of the flow of air molecules across the width of the coil. Thus, the molecules are well distributed, and energy transfer is also well distributed and uniform.

Many simulations as well as tests on prototypes have confirmed that in the absence of the shear barrier in an angle, the air stream moves in creating a greater pressure at one end of the coil which moved the air at a greater speed which resulted in a decline in overall efficiency of the energy transfer.

This double action deflector helps to increase the turbulence in the air stream in two ways. First by creating a deflection in the air stream, it necessarily causes the positional change of the molecules within the air stream, which creates turbulence. Secondly, when striking the shear barrier in an angle, as air passes besides the diverter, it creates a venturi effect which sucks air out of the inner low pressure zone - hence its name. Of course, when the pressure is too low, the fast moving air is diverted into the inner low pressure zone and enters to create a vortex which results in turbulence in the air flow.

The configuration and combination of the various components as well as the unique shape of the double action deflector creates a better control of certain phenomena such as turbulence, and the redirection of air produces a result much superior than any similar equipment from the prior art. Although the conceptual components are not new in themselves, since we do not reinvent any concepts, the new shapes, different assembly, combinations and presentation, as a whole, are new and unobvious.

Common, obvious practice would have one create a series of randomly located baffles and obstructions to create turbulence and over several iterations from changing one parameter at a time, small, incremental, single digits improvement in stirring of a fluid could be obtained.

However, this liquid-gas heat exchanger was able to create a 10% improvement on a first prototype and, based on improvements, pushed the design further to bring up total efficiency improvement to 20%.

These results were measured and validated by an independent engineering firm. That such results could be obtained by going against general knowledge and practice in the field can only be the result of unobvious, originality and creativity.

It was concluded that series of repeating patterns would be better than a series of randomly located obstacles. Therefore, by using repeating simple forms, a more predictable result can be obtained no matter the number of variations in size and shape the heat transfer device needs to be.

There has thus been outlined, rather broadly, the more important features of the invention in order that the detailed description thereof that follows may be better understood, and in order that the present contribution to the art may be better appreciated. There are additional features of the invention that will be described hereinafter and which will form the subject matter of the claims appended hereto.

In this respect, before explaining at least one embodiment of the invention in detail, it is to be understood that the invention is not limited in its application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which this disclosure is based, may readily be utilized as a basis for the designing of other structures, methods and systems for carrying out the several purposes of the present invention. It is important, therefore, that the claims be regarded as including such equivalent constructions insofar as they do not depart from the scope of the present invention.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be made to the accompanying drawings and descriptive matter which contains illustrated preferred embodiment of the invention.

### BRIEF DESCRIPTION OF THE DRAWINGS

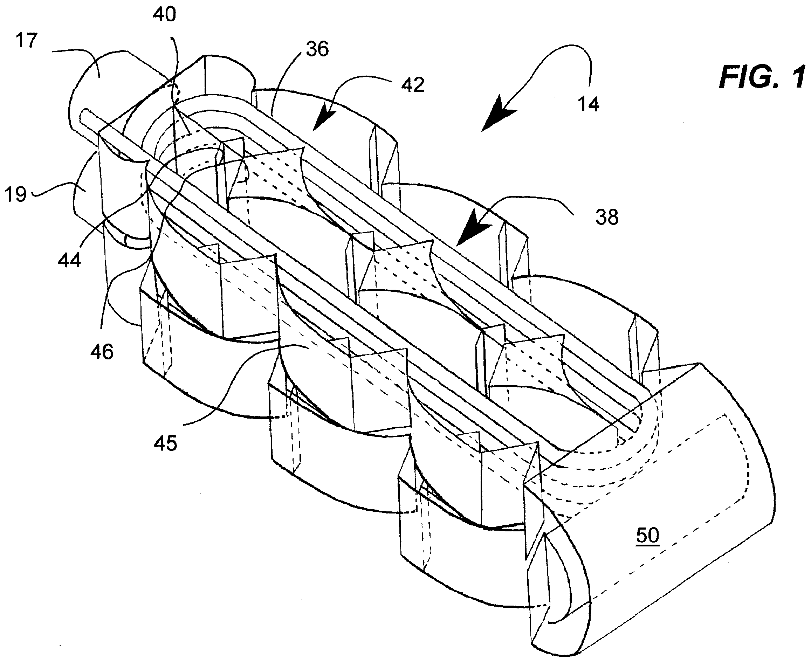

Fig. 1 Isometric view of the exchanger.

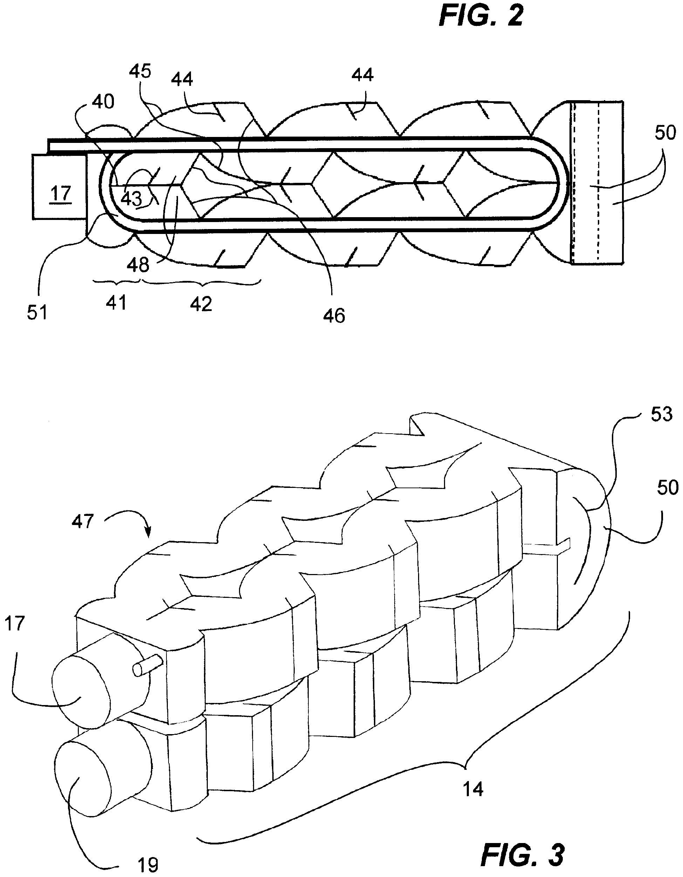

Fig. 2 Cutaway top view of the exchanger.
Fig. 3 Isometric see through view of the exchanger.

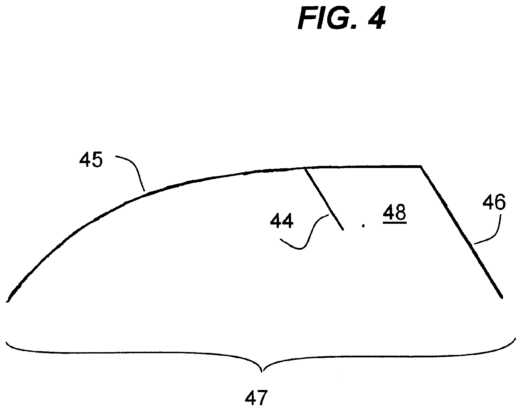

**Fig.** 4 Top view of the deflector.

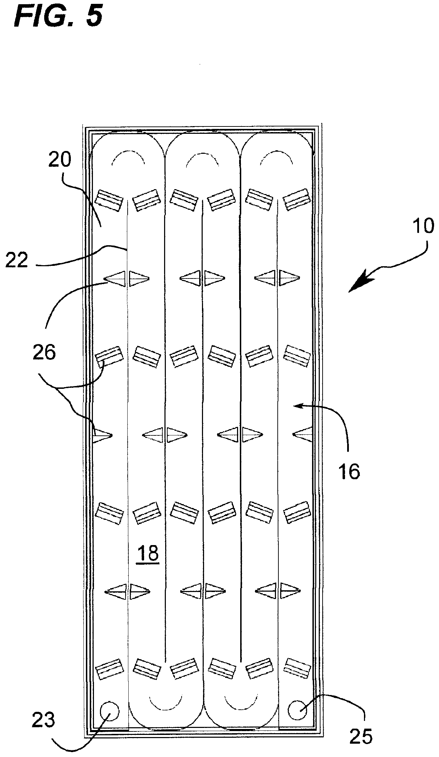

**Fig.** 5 Top view of the solar air-heater.

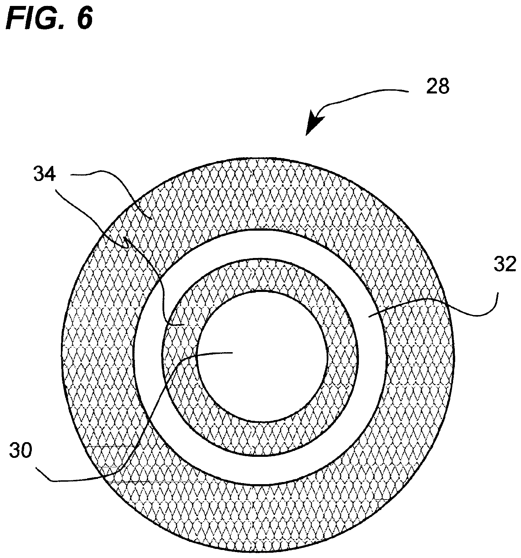

**Fig.** 6 Cutaway front view of the double pipe.

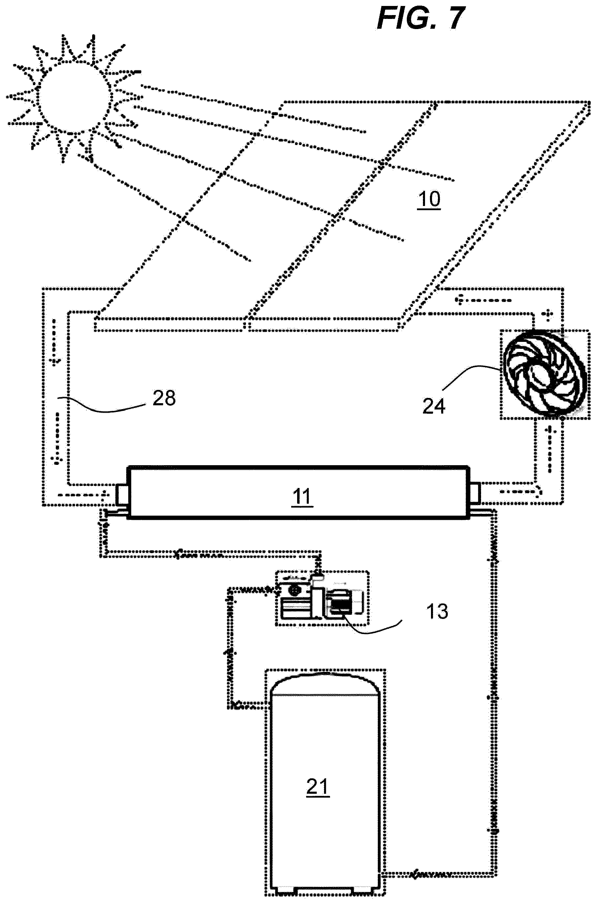

**Fig.** 7 Schematic view of the entire system.

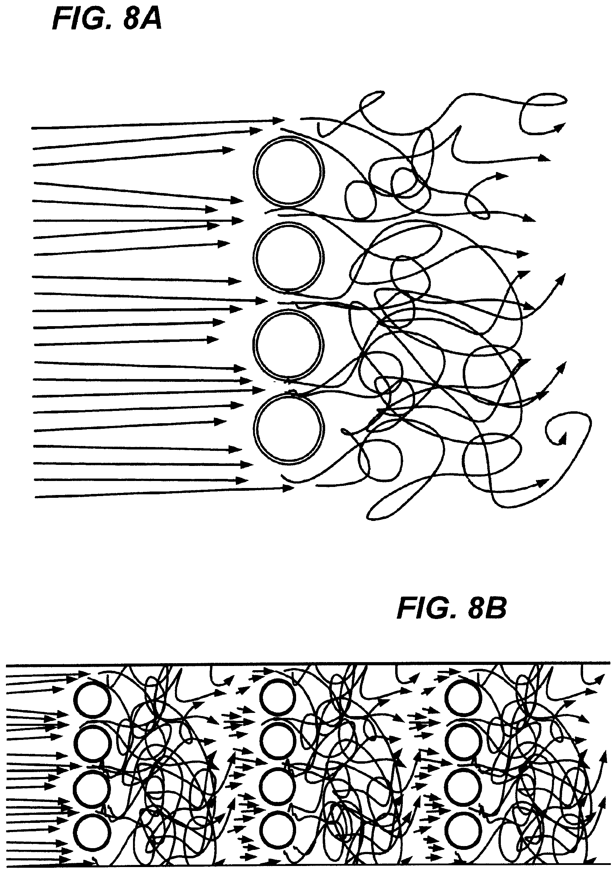

**Figs. 8A-B** illustrate how the positioning and the presence of each coil tube bundle section is effective in causing a large amount of used air to come into turbulence.

### DETAILED DESCRIPTION

A heat exchange system for use in liquid-gas heat exchange using solar energy is comprised of three (components: A solar heater panel (10), a double pipe (28), and a heat exchanger (14). Other components include a water pump (13) and a water tank (21).

Except for the fact that it uses air instead of water, the solar air-heater panel (10), is similar to solar liquid-heater panels. Sunlight passes through a sheet of transparent glass (16) and heats up a back panel (18) painted a dark color so as to generate as much heat as possible. There is a single circuitous path (20) defined by wall members (22) that snakes across the panel (10). The air is forced, by way of a fan (24), pushing air into an entry (23), passing over a plurality of baffles (26) which mixes the air so that it is evenly warmed up with minimal temperature variations, and coming out at an exit point (25). The air-heater panel (10) does not form part of this invention, it is just introduced here to show the general context of use of the invention.

The double pipe (28) consists in a small diameter inner pipe (30) that runs inside an outer pipe (32). Both pipes (30, 32) are separated by a layer of insulating material (34). The outer pipe (32) also has an layer of insulating material (34) surrounding its exterior. The inner pipe (30) carries hot air coming from the solar air-heater panel (10), and the outer pipe (32) carries cooler air coming from the air-liquid heat exchanger (14). The double pipe (28) also does not form part of the invention and is shown here as an example of possible use in this context.

From the double pipe (28), the air moves, by way of an inlet (17), into the heat exchanger (14) which is located inside an insulated container (11). The air stream immediately enters an ante-chamber (41) where the air stream crosses a first tube bundle (51), is then divided by a divider (40) so that it travels in two separate parallel paths, wherein each path strikes an initial deflector (43) which directs the air stream into a chamber (42). In these chambers (42), the air stream interacts with a deflector (47) which is comprised of a curved wall (45), a shear barrier (44) and a diverter (46) located at the end of the curved wall (45). The air stream first crosses a section of tube bundle (36) along a curved wall (45). An inner low pressure zone (48) is located between the shear barrier (44) and the diverter (46) which forms part of the end of the deflector (47). As the air stream goes passing the deflector (47), it creates a venturi effect which sucks air out of the low pressure zone (48) (hence its name). Of course, when the pressure gets too low, the fast moving air enters into the low pressure zone to create a vortex which results in turbulence in the air flow.

The deviation of the air by the deflector (44), by ripple effect, produces a thrust on the air flowing closer to the coil (38). The overall effect is to uniformly distribute air across the width of the tube bundle (36). After passing between the tube bundle (36), the air stream continues into the next chamber (42). From there, the process is repeated with the air stream passing through the coil (38) with maximum turbulence.

The process is repeated in over 8 sections crossing the coil (38) until it hits the doubled-up rounded section (50) which bring air into a next series of chambers (42).

During its travel in the new chamber (42), the air again crosses the coil (38) 8 times before it exits the heat exchanger (14) by way of an outlet (19) where the two parallel paths of air reunite and go back to the solar heater panel (10) to pick up heat before returning to the exchanger (14).

The flow of liquid inside the coil (38) starts at the bottom of the exchanger (14), where the heat of the air is low, and ends at the top of the exchanger, (14) where the air is at its warmest.

In the case of heat transfer from air to liquid, with so much turbulence, each air molecule has a chance to make contact with the coil (38) and exchange its heat. In the case of transfer from hot liquid to air, the heat reaches each air molecule since they all make contact with the coil (38).

Air travel inside the exchanger (14) is measured in tenths of a second, which implies high speed and high volume of air. As long as there is an ample supply of hot air or that the available air can be heated up rapidly with a large array of solar heater panels (10) or other sources of hot air that can form as a result of some industrial process, this exchanger (14) can be the solution for capturing heat and turning it into something useful that can be used in some other part of a given industrial process or even be shared with a neighboring industry or factory.

The exchanger (14) as described hereinabove, is preferably surrounded on its six sides by the container (11) to reduce heat loss during the heat transfer operation. This container (11) does not form part of the invention and is shown here as an example of possible use in this context.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention. Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A heat exchanger (14) is comprised of a plurality of chambers (42), wherein each said plurality of chambers (42) having a repeating pattern of shapes wherein each said plurality of chambers (42) consists of two opposite deflectors (47) wherein each deflector (47) is an offset mirror image of its opposite deflector (47) each said deflector (47) defined by a specific sequence of components starting with a rounded wall (45) from which extends a shear barrier (44) and said wall terminated by a diverter (46), and; said diverter (46), along with said shear barrier (44), forming a low pressure zone (48) which creates a vortex; a coil (38) for carrying a liquid wherein said coil (38) consisting of a long winding pipe forming tube bundles (36) passing through all said plurality of chambers (42); an inlet (17) and an outlet (19).

2. The heat exchanger (14) of claim 1 wherein air enters by way of an inlet (17) into said plurality of chambers (42); said air is then divided in two air streams so that said air streams enter two separate but parallel of said plurality of chambers (42); said air streams interacting with said walls; said air streams passing through said coil (38) which carries a heat transfer liquid; said air streams following a doubled-up rounded section (50) that brings said air streams into a second half of said plurality of chambers (42) and said coil member (38), said air streams reaching an outlet (19) and exiting said heat exchanger (14).

3. The heat exchanger (14) of claim 1 wherein the flow of liquid inside said coil (38) starting at a point in said heat exchanger (14) where air temperature is at its lowest and said flow finishing where said air temperature is at its highest.

4. Method of using the heat exchanger (14) of claim 1 wherein air is heated by way of a solar heat panel (10).

5. The heat exchanger (14) of claim 2 wherein the flow of liquid inside said coil (38) starting at a point in said heat exchanger (14) where air temperature is at its lowest and said flow finishing where said air temperature is at its highest.

6. Method of using the heat exchanger (14) of claim 2 wherein air is heated by way of a solar heat panel (10).

7. Method of using a heat exchanger (14) according to one of the claims 2,5,6, wherein a high velocity air stream enters through an inlet (17) into said heat exchanger (14); said air stream enters an antechamber (41) wherein the air stream crosses a first tube bundle (51), is then divided by a divider (40) so that said air stream travels in two separate parallel paths, wherein in each path, the air stream strikes an initial deflector (43) which directs said air stream into one of a plurality of chambers (42); in said plurality of chambers, a portion of said air stream interacts with a curved wall while another portion of said air stream creates a venturi effect which sucks air from a low pressure zone wherein said low pressure zone is defined by a space between a shear barrier and a diverter; said air stream crossing tube bundles (36) along said deflector (47) as it continues into the next chamber (42) and all the way to an outlet (19).

## Patentansprüche

1. Ein Wärmetauscher (14) besteht aus einer Vielzahl von Kammern (42), wobei jede der Vielzahl von Kammern (42) ein sich wiederholendes Muster von Formen aufweist, wobei jede der Vielzahl von Kammern (42) aus zwei gegenüberliegenden Deflektoren (47) besteht, wobei jeder Deflektor (47) ein versetztes Spiegelbild seines gegenüberliegenden Deflektors (47) ist, wobei jeder Deflektor (47) durch eine spezifische Abfolge von Komponenten definiert ist, beginnend mit einer abgerundeten Wand (45), von der sich eine Schersperre (44) erstreckt, und wobei die Wand durch eine Ablenkeinrichtung (46) abgeschlossen ist, und; wobei die Ablenkeinrichtung (46) zusammen mit der Schersperre (44) eine Niederdruckzone (48) bildet, die einen Wirbel erzeugt; eine Spule (38) zum Befördern einer Flüssigkeit, wobei die Spule (38) aus einem langen, gewundenen Rohr besteht, das Rohrbündel (36) bildet, die durch alle der mehreren Kammern (42) verlaufen; einen Einlass (17) und einen Auslass (19).

2. Wärmetauscher (14) nach Anspruch 1, bei dem Luft über einen Einlass (17) in die mehreren Kammern (42) eintritt; die Luft dann in zwei Luftströme geteilt wird, so dass die Luftströme in zwei getrennte, aber parallele der mehreren Kammern (42) eintreten; wobei die Luftströme mit den Wänden in Wechselwirkung stehen; die Luftströme durch die Spule (38) hindurchgehen, die eine Wärmeübertragungsflüssigkeit trägt; die Luftströme einem doppelt gerundeten Abschnitt (50) folgen, der die Luftströme in eine zweite Hälfte der Vielzahl von Kammern (42) und der Spule (38) bringt, wobei die Luftströme einen Auslass (19) erreichen und den Wärmetauscher (14) verlassen.

3. Wärmetauscher (14) nach Anspruch 1, wobei die Flüssigkeitsströmung innerhalb der Spule (38) an einem Punkt in dem Wärmetauscher (14) beginnt, an dem die Lufttemperatur am niedrigsten ist, und die Strömung dort endet, wo die Lufttemperatur am höchsten ist.

4. Verfahren zur Verwendung des Wärmetauschers (14) nach Anspruch 1, bei dem die Luft mit Hilfe eines Solarwärmepaneels (10) erwärmt wird.

5. Wärmetauscher (14) nach Anspruch 2, bei dem der Flüssigkeitsstrom im Inneren der Spule (38) an einem Punkt in dem Wärmetauscher (14) beginnt, an dem die Lufttemperatur am niedrigsten ist, und die Strömung dort endet, wo die Lufttemperatur am höchsten ist.

6. Verfahren zur Verwendung des Wärmetauschers (14) nach Anspruch 2, bei dem die Luft mit Hilfe eines Solarwärmepaneels (10) erwärmt wird.

7. Verfahren zur Verwendung eines Wärmetauschers (14) nach einem der Ansprüche 2, 5, 6, wobei ein Hochgeschwindigkeitsluftstrom durch einen Einlass (17) in den Wärmetauscher (14) eintritt; der Luftstrom in eine Vorkammer (41) eintritt, wobei der Luftstrom ein erstes Rohrbündel (51) kreuzt, dann durch einen Teiler (40) geteilt wird, so dass der Luftstrom in zwei getrennten parallelen Pfaden wandert, wobei der Luftstrom in jedem Pfad auf einen anfänglichen Deflektor (43) trifft, der den Luftstrom in eine von mehreren Kammern (42) lenkt; in den mehreren Kammern ein Teil des Luftstroms mit einer gekrümmten Wand interagiert, während ein anderer Teil des Luftstroms einen Venturi-Effekt erzeugt, der Luft aus einer Niederdruckzone ansaugt, wobei die Niederdruckzone durch einen Raum zwischen einer Scherbarriere und einer Umlenkeinrichtung definiert ist; wobei der Luftstrom Rohrbündel (36) entlang der Umlenkeinrichtung (47) kreuzt, während er sich in die nächste Kammer (42) und den ganzen Weg zu einem Auslass (19) fortsetzt.

## Revendications

1. Echangeur de chaleur (14) comprenant une pluralité de chambres (42), dans lequel chacune desdites pluralité de chambres (42) a un motif répétitif de formes, dans lequel chacune desdites pluralité de chambres (42) consiste en deux déflecteurs opposés (47), dans lequel chaque déflecteur (47) est une image miroir décalée de son déflecteur opposé (47), chaque déflecteur (47) étant défini par une séquence spécifique de composants commençant par une paroi arrondie (45) à partir de laquelle s'étend une barrière de cisaillement (44) et ladite paroi se terminant par un déviateur (46), et ; ledit déviateur (46), avec ladite barrière de cisaillement (44), formant une zone de basse pression (48) qui crée un tourbillon ; un serpentin (38) pour transporter un liquide, ledit serpentin (38) consistant en un long tuyau enroulé formant des ensembles de tubes (36) passant à travers toute ladite pluralité de chambres (42) ; une entrée (17) et une sortie (19).

2. Echangeur de chaleur (14) selon la revendication 1, dans lequel l'air entre par une entrée (17) dans ladite pluralité de chambres (42) ; ledit air est ensuite divisé en deux flux d'air de sorte que lesdits flux d'air entrent dans deux chambres séparées mais parallèles de ladite pluralité de chambres (42) ; lesdits flux d'air interagissant avec lesdites parois ; lesdits flux d'air passant à travers ledit serpentin (38) qui transporte un liquide de transfert de chaleur ; lesdits flux d'air suivant une section arrondie doublée (50) qui amène lesdits flux d'air dans une seconde moitié de ladite pluralité de chambres (42) et dudit élément de serpentin (38), lesdits flux d'air atteignant une sortie (19) et sortant dudit échangeur de chaleur (14).

3. Echangeur de chaleur (14) selon la revendication 1, dans lequel l'écoulement de liquide à l'intérieur dudit serpentin (38) commence en un point dudit échangeur de chaleur (14) où la température de l'air est la plus basse et ledit écoulement se termine là où ladite température de l'air est la plus élevée.

4. Procédé d'utilisation de l'échangeur de chaleur (14) selon la revendication 1, dans lequel l'air est chauffé au moyen d'un panneau solaire thermique (10).

5. Echangeur de chaleur (14) de la revendication 2, dans lequel l'écoulement de liquide à l'intérieur dudit serpentin (38) commence en un point dudit échangeur de chaleur (14) où la température de l'air est la plus basse et ledit écoulement se termine là où ladite température de l'air est la plus élevée.

6. Procédé d'utilisation de l'échangeur de chaleur (14) de la revendication 2, dans lequel l'air est chauffé au moyen d'un panneau solaire thermique (10).

7. Procédé d'utilisation d'un échangeur de chaleur (14) selon l'une des revendications 2, 5, 6, dans lequel un flux d'air à grande vitesse entre par une entrée (17) dans ledit échangeur de chaleur (14) ; ledit flux d'air entre dans une antichambre (41) dans laquelle le flux d'air traverse un premier ensemble de tubes (51), est ensuite divisé par un diviseur (40) de sorte que ledit flux d'air se déplace en deux chemins parallèles séparés, dans lequel dans chaque chemin, le flux d'air frappe un déflecteur initial (43) qui dirige ledit flux d'air dans l'une d'une pluralité de chambres (42) ; dans ladite pluralité de chambres, une partie dudit flux d'air interagit avec une paroi incurvée tandis qu'une autre partie dudit flux d'air crée un effet venturi qui aspire l'air d'une zone de basse pression, dans laquelle ladite zone de basse pression est définie par un espace entre une barrière de cisaillement et un déviateur ; ledit flux d'air traversant des ensembles de tubes (36) le long dudit déflecteur (47) alors qu'il continue dans la chambre suivante (42) et jusqu'à une sortie (19).
